# EUROPEAN PATENT SPECIFICATION

(11) **EP 3 098 092 B1**
(45) Date of publication and mention of the grant of the patent: **31.01.2018**
(21) Application number: 16170283.2
(22) Date of filing: 19.05.2016
(51) Int. Cl.: B60C 25/05

(54) **SPINDLE FOR TIRE CHANGING MACHINES**
SPINDEL FÜR REIFENWECHSELMASCHINEN
ARBRE POUR MACHINE DE CHANGEMENT DE PNEUS

(30) Priority: 20.05.2015 IT UB20150892
(43) Date of publication of application: 30.11.2016
(73) Proprietor: Devel S.r.l., 41042 Fiorano Modenese (MO) (IT)
(72) Inventor: Bonetti, Valentino, 41042 Fiorano Modenese (IT)
(74) Representative: Brunacci, Marco

(56) References cited:
- EP-A1- 1 612 064
- EP-A2- 1 157 861
- IT-A1- BI20 120 003

## Description

The present invention relates to a spindle for garage equipment machines, particularly for tire changing machines or the like.

In the field of garage equipment the use is known and widespread of so-called "tire changing machines" suitable for allowing the fitting and removing of the tire onto and from the corresponding rim of a wheel for vehicles.

The tire changing machines commonly comprise a supporting base for means for gripping and setting in rotation the rim of a wheel, having a spindle for the locking of the rim, and an upright that rises vertically from the base and which supports a tool holder arm having one or more tools suitable for removing and fitting the tire from/onto the rim.

A particular type of known spindle comprises a wheel-carrying flange supported by the base of the tire changing machine in a revolving manner around a central axis of rotation by the action of a suitable motor.

The wheel-carrying flange has a central hole within which a special rim locking pin is insertable.

For example, the pin can have an end screwable inside the hole on the flange and a rim locking cone inserted axially rotatable and screwable on the upper end of the pin.

The locking cone usually has gripping knobs which permit the screwing of the cone on the pin.

In particular, in use, the rim is positioned on the flange, with the central hole of the rim aligned with the central hole on the flange, and the pin is inserted and screwed inside the hole on the flange as far as the cone is positioned in contact or anyway in the proximity of the rim, on top of it.

The screwing of the cone on the pin, carried out by acting on the knobs, allows the positioning of the cone in contact with the rim and allows, therefore, the locking of the rim on the flange.

This type of known spindle has, however, some drawbacks.

In particular, the screwing of the pin inside the hole on the flange and the locking of the rim by screwing the cone on the pin require a not negligible time.

Furthermore, the locking of the rim by screwing the cone on the pin requires a not negligible physical effort by the operator and does not always ensure an effective clamping of the rim on the flange.

A further type of known spindle involves the use of a pin with a locking cone and a lower end coupleable with movement means inside the hole of the flange (for example known from EP 1157861 A2 or EP 1612064 A1). In use, the operator must lock the lower end of the pin to the actuating means within the hole, e.g. by means of a suitable bayonet coupling.

Subsequently, the actuating means drag the pin downwards by positioning the cone in contact with the rim, locking therefore the rim on the flange.

Even this known type of spindle is not without drawbacks.

In fact, this spindle requires the presence of actuating means of the pin and, therefore, is structurally complex.

Furthermore, the operation of insertion and locking of the pin inside the hole on the flange so as to move the locking cone as close as possible to the rim, before lowering by means of the actuating means, is not always simple and immediate.

The Italian patent document corresponding to application number IT1410113 illustrates a spindle for garage equipment machines, particularly for tire changing machines or the like.

The spindle illustrated in the aforementioned patent document provides for rim locking means having:
- an extremal portion projecting with respect to the resting element and able to be inserted within a through hole on the rim;
- a retaining element of the rim associated with a movable element with respect to the base of the spindle;
- a stop element of the movable element having a through hole in which is inserted an elongated section of the movable element itself;
with the stop element which moves between a sliding position and a stopping position thanks to the operation means able, in fact, to mobilize the stop element itself between the two aforementioned positions.

The latter type of known spindle is however susceptible of further upgrading aimed at improving the retention of the wheel.

The main aim of the present invention is to provide a spindle for garage equipment machines, particularly for tire changing machines or the like, which allows to lock the rim of a wheel for vehicles in an effective, fast and simple manner.

Another object of the present invention is to provide a spindle for garage equipment machines, particularly for tire changing machines or the like, which allows to lock the rim of a wheel for vehicles with a minimum effort for the operator.

Another object of the present invention is to provide a spindle for garage equipment machines, particularly for tire changing machines or the like, which allows to overcome the mentioned drawbacks of the prior art within the ambit of a simple, rational, easy and effective to use as well as affordable solution.

The above mentioned objects are achieved by the present spindle for garage equipment machines, particularly for tire changing machines or the like, having the characteristics of claim 1.

Other characteristics and advantages of the present invention will become better evident from the description of a preferred, but not exclusive, embodiment of a spindle for garage equipment machines, particularly for tire changing machines or the like, illustrated by way of an indicative, but non-limiting example in the accompanying drawings in which:
Figure 1 is a perspective view of a tire changing machine with the spindle installed according to the invention;

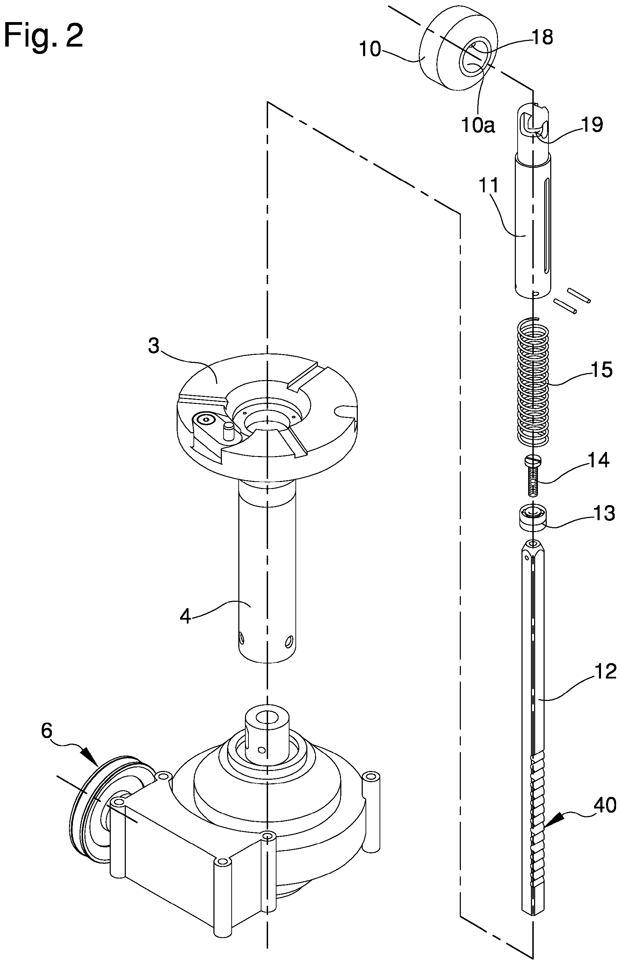

Figure 2 is an exploded view of the spindle according to the invention;
Figures 3, 4 and 5 show distinct configurations of the spindle according to the invention during operation;
Figure 6 is an axonometric view of a detail of the spindle according to the invention.

With particular reference to such figures, reference number 1 globally indicates an upgraded spindle for the locking and rotation of rims of vehicle wheels on garage equipment machines.

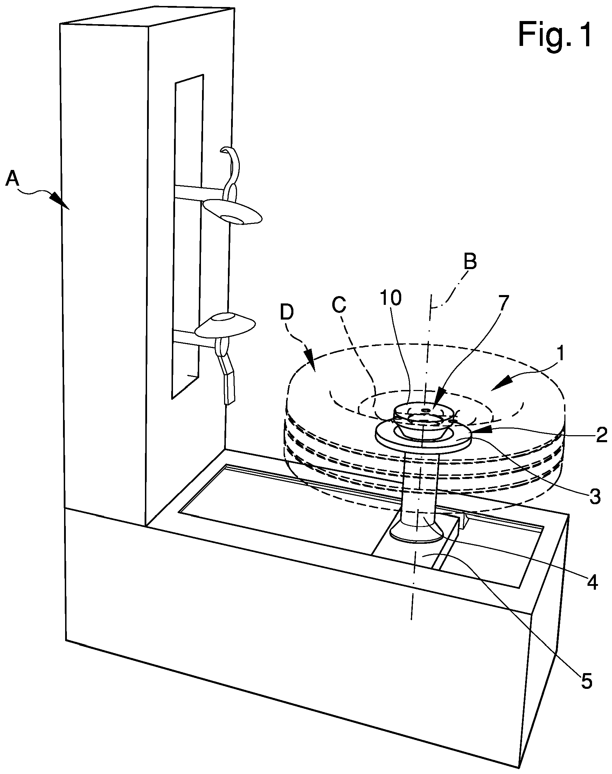

In particular, the spindle 1 can be fitted on a tire changing machine of the conventional type similar to the machine A shown in Figure 1.

The installation of the spindle 1 on garage equipment machines of different kind cannot however be ruled out.

The spindle 1 comprises a supporting structure, globally designated by reference number 2, having a resting element 3 rotatable around an axis of rotation B and meant to receive in support the rim C of a wheel D for vehicles.

The resting element 3 has a substantially plate-shaped conformation.

With particular reference to the embodiment of the spindle 1 as described and illustrated in the figures, the resting element 3 is composed of a flange of the type conventionally present in the spindle of tire changing machines or the like.

The realization of a resting element 3 of a different shape and type cannot however be ruled out.

The supporting structure 2 comprises a substantially tubular holding element 4, supported by a base 5, rotatable around the axis of rotation B and having the flange 3.

In particular, still with reference to the embodiment of the spindle 1 as described and illustrated in the figures, the holding element 4 is composed of a tubular and cylindrical body that extends vertically from the base 5, which is rotatable around its longitudinal axis and which has the upper end provided with the flange 3.

Different conformations and arrangements of the holding element 4 cannot however be ruled out.

The spindle 1 also comprises rotation means 6 able to rotate the holding element 4 and, therefore, the flange 3 around the axis of rotation B.

Preferably, the rotation means 6 are composed of motion transmission means operatively connected to the motor means present on the machine A, not shown in the figures, and to the holding element 4.

In particular, the motion transmission means 6 can be composed of a gear unit supported by the base 5 and associated with the lower end of the holding element 4. The gear unit 6 is able to receive the motion generated by the motor means on the machine A to cause the rotation of the holding element 4 around the axis of rotation B.

The spindle 1 comprises locking means, globally indicated in the figures with reference number 7, able to lock the rim C on the flange 3.

Advantageously, the locking means 7 comprise a movable element 8 having an extremal portion 9 projecting with respect to the flange 3, able to be inserted within the central through hole of the rim C and with which is associated a retaining element 10 able to retain the rim C on the flange 3.

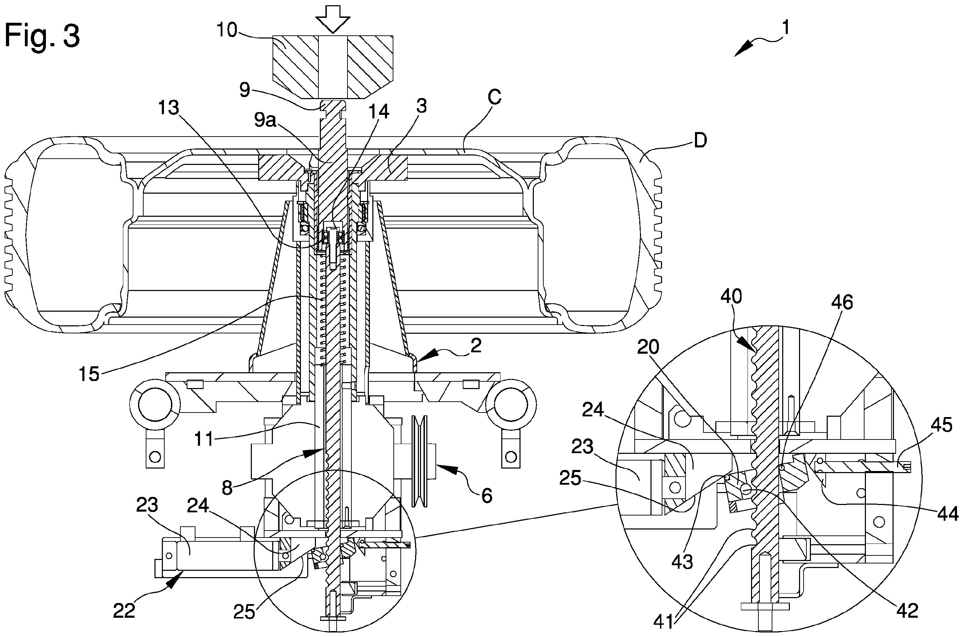

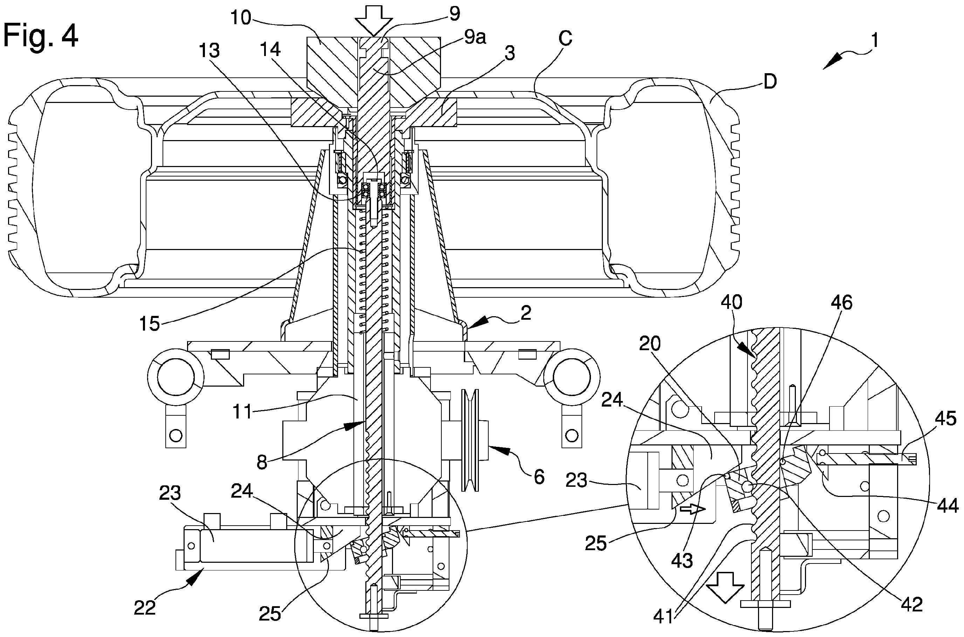

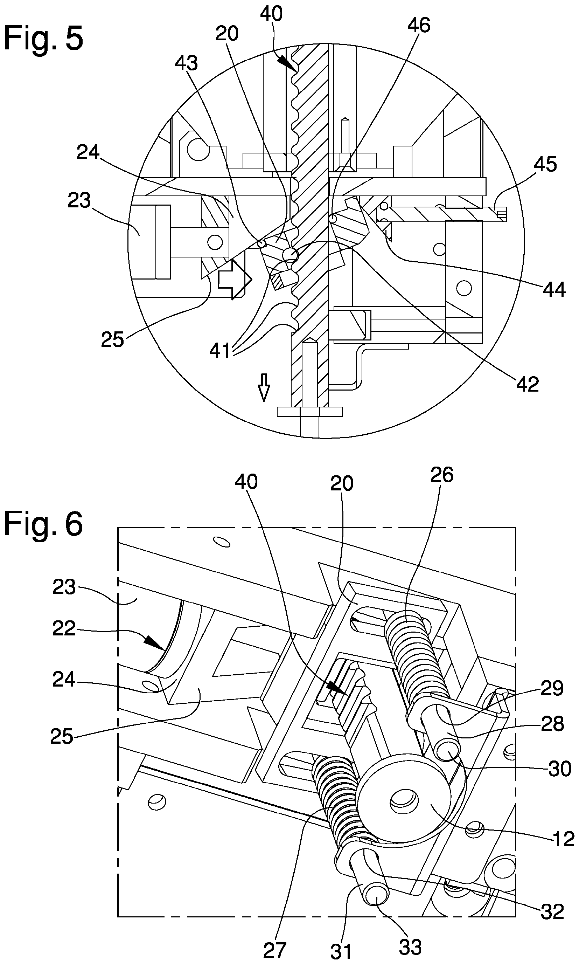

In particular, the movable element 8 is translatable among:
- a raised position, wherein the retaining element 10 is substantially moved away from the flange 3 (Figure 3);
- a lowered position, wherein the retaining element 10 is moved close with respect to the flange 3 and is able to be arranged in contact with the rim C (Figure 4);
- a locking position, wherein the retaining element is further moved close with respect to the flange 3 and is able to engage on the rim C for the locking of the rim on the flange 3 (Figure 5).

Conveniently, the movable element 8 has a substantially elongated conformation and is axially translatable along a substantially vertical direction.

In particular, with reference to the embodiment of the spindle 1 as described and illustrated in the figures, the movable element 8 comprises a first portion 11 composed of a tubular element.

The movable element 8 also comprises a second portion 12 composed of a rod.

Conveniently, the movable element 8 comprises turning coupling means, indicated in the figures with reference number 13, interposed between the tubular element 11 and the rod 12 and able to allow the rotation of the tubular element 11 with respect to the rod 12.

In particular, the turning coupling means 13 are composed of a bearing, wherein the outer ring of the bearing 13 is locked together with the inner wall of the tubular element 11, at a lower end, while the inner ring of the bearing 13 is locked together by means of threaded means 14 or the like at an upper end of the rod 12.

Conveniently, the tubular element 11 and part of the rod 12 are housed axially rotatable within the holding element 4.

Different conformations and/or arrangements of the movable element 8 cannot however be ruled out.

The spindle 1 also comprises elastic lifting means 15, interposed between the movable element 8 and the supporting structure 2, able to bring the movable element 8 towards the raised position and able to counteract the displacement of the movable element 8 towards the lowered position.

The elastic lifting means 15 are preferably composed of a spring housed inside the tubular element 11.

In particular, the spring 15 wraps at least in part the rod 12 and has the upper end associated with the tubular element 11 and the lower end associated with the supporting structure 2.

Conveniently, the upper portion of the tubular element 11 has the extremal portion 9.

Preferably, the extremal portion 9 is composed of a substantially cylindrical attachment element 9 locked together with the upper end of the tubular element 11.

In particular, the attachment element 9 has a lower portion 9a fitted snugly in the opening 11a at the upper end of the tubular element 11 and fixed by means of suitable fixing means.

In a preferred embodiment of the spindle 1, the retaining element 10 is associable in a removable manner with the attachment element 9 by means of quick coupling means.

Preferably, the retaining element 10 has a substantially frusto-conical shape and has a central through hole 10a able to house snugly part of the attachment element 9.

The quick coupling means can be composed, e.g., of a bayonet coupling or the like, made by means of a pair of pins 18 overhanging from opposed portions of the inner surface of the through hole 10a of the retaining element 10 and a pair of respective substantially L-shaped grooves 19 formed on opposed portions of the outer surface of the extremal portion.

In particular, each of the grooves 19 has a section substantially parallel to the direction of displacement of the movable element 8, able to allow the insertion of each of the respective pins 18, and a section substantially transversal to the direction of displacement of the movable element 8, able to house and retain each of the pins 18.

Alternative embodiments of the spindle 1 cannot however be ruled out wherein, e.g., the retaining element 10 is locked together with the extremal portion 9 of the movable element 8 and the movable element 8 is associable in a removable manner with the supporting structure 2 and, therefore, can be fitted in/taken out of the respective housing on the holding element 4 during use.

Advantageously, the locking means 7 comprise a stop element 20 of the movable element 8.

The stop element 20 has a through hole 21 for the passage of an elongated section of the movable element 8, corresponding to a section of the rod 12, and is rotatable between a sliding position, wherein the through hole 21 is coupled to the rod 12 with play, and a stopping position, wherein the through hole 21 is substantially inclined with respect to the rod 12 and the walls of the through hole 21 are engaged on the rod 12.

According to the invention the elongated section 12 comprises at least a toothing 40 having a plurality of housing concavities 41.

Still according to the invention, the walls of the through hole 21 comprise at least a positioning element 42 able to be coupled to the housing concavities 41 in predefined positions of the movable element 8.

In particular, the housing concavities 41 are able to position in a stable manner the positioning element 42 as the rod 12 slides downwards.

The positioning element 42 is the type of a roller mounted on the stop element 20 in a revolving manner around an axis substantially transversal to the direction of the rod 12.

This way the sliding and positioning of the rod 12 is facilitated, thus allowing a better fitting of the spindle 1 to different types of wheel and rim.

The spindle 1 also comprises operation means, globally designated in the illustrations by reference number 22, able to operate the stop element 20 to move it from the sliding position to the stopping position.

Advantageously, the operation means 22 are composed of rotation and translation means of the stop element 20 able to:
- rotate the stop element 20 from the sliding position to the stopping position to lock the stop element on the rod 12 arranged in the lowered position (Figure 4);
- translate the stop element 20 from the stopping position to a pulling position to drag the rod 12 and, then, the whole movable element 8 towards the locking position (Figure 5).

With particular reference to the embodiment of the spindle 1 as described and illustrated in the figures, the operation means 22 comprise an actuator 23 and a thrust element 24 operatively connected to the actuator 23 and able to engage on the stop element 20.

Preferably, the actuator 23 is composed of a linear actuator arranged horizontally to the side of the stop element 20.

The thrust element 24 is translatable by the action of the actuator 23 between a first position and a second position, illustrated in Figures 3 and 4 respectively, along a direction substantially transversal to the direction of displacement of the movable element 8.

The thrust element 24 is substantially wedge-shaped and has an inclined surface 25 with respect to the direction of translation of the thrust element itself.

The stop element 20 has a substantially plate shape and has the through hole 21 at a substantially central portion.

The thrust element 24 is arranged to the side of the stop element 20.

During the translation between the first and the second position the inclined surface 25 is able to engage on a lateral portion 20a of the stop element 20 so as to exert on this lateral portion a transversal force with respect to the direction of translational motion of the thrust element 24.

This way, the stop element 20 is rotated from the sliding position to the stopping position.

Advantageously, the thrust element 24 is movable by the action of the actuator 23 between the second position and a third position, illustrated in Figures 4 and 5 respectively, along a direction substantially transversal to the direction of displacement of the movable element 8.

During the translation between the second and the third position the inclined surface 25 is able to engage on the lateral portion 20a of the stop element 20 to move the stop element itself from the stopping position to the pulling position.

Advantageously, between the stop element 20 and the thrust element 24 is placed a sliding roller 43 able to facilitate the rotation and translation of the stop element 20.

The sliding roller 43 is mounted on the stop element 20 in a revolving manner around an axis substantially parallel to the axis of rotation of the stop element 20, so as to facilitate the sliding of the latter.

Advantageously, between the stop element 20 and the rod 12 is placed a rolling roller 46 able to further facilitate the sliding of the stop element itself with respect to the rod 12.

The rolling roller 46 mounted on the stop element 20 at the walls of the through hole 21 and in a revolving manner around an axis substantially transversal to the direction of the rod 12 to roll in contact with the side of the rod 12 opposite the toothing 40.

Different solutions cannot be ruled out wherein, e.g., the sliding roller 43 and the rolling roller 46 are arranged in different positions, or wherein there is a plurality of elements able to cause the stop element 20 to slide.

The rotation and translation means 22 also comprise at least a shoulder 44 able to guide the stop element 20 from the sliding position to the stopping position and from the stopping position to the pulling position.

The shoulder 44 is placed on the opposite side with respect to the actuator 23 and is also wedge-shaped so as to define the inclination of the stop element 20 when the latter is pushed in contact with the shoulder itself.

The position of the shoulder 44 on the supporting structure 2 is adjustable by means of an adjusting screw 45.

Alternative solutions cannot be ruled out wherein, e.g., instead of the shoulder 44 is installed a system of rollers or different guide means of the stop element 20.

The operation means 22 also comprise elastic contrast means associated with the stop element 20 and able to counteract the rotation of the stop element 20 from the sliding position to the stopping position and from the stopping position to the pulling position.

In particular, with reference to the embodiment of the spindle 1 as described and illustrated in the figures, the elastic means comprise a first spring 26 and a second spring 27 engaged at respective portions of the stop element 20 substantially opposite with respect to the hole 21.

A first pin 28 extends downwards from the base 5 through a first hole 29 on the stop element 20 and terminates in a substantially enlarged first head 30.

The first spring 26 is interposed between the first head 30 and the lower surface of the stop element 20, at the first hole 29.

A second pin 31 extends downwards from the base 5 through a second hole 32 on the stop element 20 and terminates in a substantially enlarged second head 33.

The second spring 27 is interposed between the second head 33 and the lower surface of the stop element 20, at the second hole 32.

The first hole 29 and second hole 32 are formed at substantially opposite portions with respect to the through hole 21.

The first pin 28 and second pin 31 extend from the base 5 on substantially opposing portions with respect to the rod 12.

Different embodiments of the elastic means cannot however be ruled out which counteract the rotation and the translation of the stop element 20 from the sliding position, to the stop position, as far as the pulling position.

Furthermore, different embodiments of the operation means 22 cannot be ruled out.

For example, in an alternative embodiment the operation means 22 can comprise a linear actuator arranged vertically with the movable stem associated with the lateral portion 20a of the stop element 20 and able to exert a pulling and/or thrust so as to move the stop element 20 among the sliding position, the stopping position and the pulling position.

The use of the spindle 1 is described below.

Initially the movable element 8 is in the lowered position or the locking position, so as to retract the attachment element 9 as much as possible to facilitate the positioning of the rim C on the flange 3.

Subsequently, an operator places the rim C on the flange 3.

The spindle 1 is brought to a release position, shown in Figure 3, wherein the movable element 8 is in the raised position by the action of the spring 15, the stop element 20 is in the sliding position and the attachment element 9 is raised and fitted in the central hole of the rim C.

The operator fixes the retaining element 10 to the attachment element 9 by causing the pins 18 to slide within the grooves 19.

The spindle 1 is brought to an intermediate configuration, illustrated in Figure 4, wherein the movable element 8 is in the lowered position, the retaining element 10 is moved close with respect to the flange 3 and is arranged in contact with or anyway in the proximity of the rim C.

Conveniently, it is the operator himself who can manually bring the movable element 8 from the raised position to the lowered position by pressing with a hand on the retaining element 10 fixed to the attachment element 9, in contrast to the action of the spring 15.

In the lowered position, the rod 12 turns the toothing 40 towards the stop element 20.

The operation of the actuator 23 and the positioning of the thrust element 24 from the first position to the second position then allow to bring the stop element 20 to the stopping position.

By moving to this position, the positioning element 42 engages in one of the housing cavities 41 and facilitates the coupling between the rod 12 and the stop element 20.

Finally, the spindle 1 is brought to a locking configuration, illustrated in Figure 5, wherein the movable element 8 is in the locking position and the retaining element 10 is engaged on the rim C to lock the rim itself on the flange 3.

In this configuration, the stop element 20 is brought to the pulling position thanks to the actuator 23 which, continuing its stroke, moves the thrust element 24 from the second position to the third position.

The latter, being wedge-shaped, tilts the stop element 20 with respect to the rod 12 thus ensuring a pull of the latter downwards.

Once the operations on the rim C by means of the machine A finished, the rim C can be released simply by operating the actuator 23 to bring the thrust element 24 from the third position to the first position.

This way, the first spring 26 and second spring 27 operate to return the stop element 20 to the sliding position, while the spring 15 operates to return the movable element 8 to the raised position, freeing the rim from the retaining element 10.

The operator can then remove the retaining element 10 from the attachment element 9 to lift the rim C from the flange 3.

It has in practice been observed how the described invention achieves the intended objects.

## Claims

1. Spindle (1) for garage equipment machines, particularly for tire changing machines or the like, comprising a supporting structure (2) having at least a resting element (3) for a rim (C) of a wheel (D) for vehicles, rotation means (6) of said resting element (3) around at least an axis of rotation (B) and locking means (7) of said rim (C) on said resting element (3), said locking means (7) comprising:
- at least a movable element (8) having at least an extremal portion (9) projecting with respect to said resting element (3) and able to be inserted within a through hole on said rim (C),
- at least a retaining element (10) of said rim (C) associated with said extremal portion (9),
- at least a stop element (20) of said movable element (8) having at least a through hole (21) in which is inserted at least an elongated section (12) of said movable element (8), said stop element (20) being rotatable between a sliding position, wherein said through hole (21) is coupled to said elongated section (12) with play, and a stopping position, wherein said through hole (21) is substantially inclined with respect to said elongated section (12) and the walls of said through hole (21) are engaged on said elongated section (12), and
- operation means (22) of said stop element (20) between said sliding position and said stopping position;
**characterized by** the fact that:
- said elongated section (12) comprises at least a toothing (40) having a plurality of housing concavities (41); and
- said walls of the through hole (21) comprise at least a positioning element (42) able to be coupled to said housing concavities (41) in predefined positions of said movable element (8).

2. Spindle (1) according to claim 1, **characterized by** the fact that said positioning element (42) is the type of a roller mounted on said stop element (20) in a revolving manner around an axis substantially transversal to the direction of said elongated section (12).

3. Spindle (1) according to claim 1 or 2, **characterized by** the fact that between said stop element (20) and said elongated section (12) is placed a rolling roller (46) mounted on said stop element (20) at the walls of said through hole (21) and in a revolving manner around an axis substantially transversal to the direction of said elongated section (12) to roll in contact with the side of said elongated section (12) opposite said toothing (40).

4. Spindle (1) according to one or more of the preceding claims, **characterized by** the fact that said operation means (22) comprise rotation and translation means (22) of said stop element (20) able to rotate said stop element (20) from said sliding position to said stopping position to lock said stop element (20) on said movable element (8) and able to translate said stop element (20) from said stopping position to a pulling position to drag said movable element (8).

5. Spindle (1) according to claim 4, **characterized by** the fact that:
- in a release configuration, said movable element (8) is in a raised position, said retaining element (10) is substantially moved away from said resting element (3) and said stop element (20) is in said sliding position;
- in an intermediate configuration, said movable element (8) is in a lowered position, said retaining element (10) is moved close with respect to said resting element (3) and is able to be arranged in contact with said rim (C) and said stop element (20) is in said stopping position;
- in a locking configuration, said movable element (8) is in a locking position, said retaining element (10) is engaged on said rim (C) for the locking of said rim (C) on said resting element (3) and said stop element (20) is in said pulling position.

6. Spindle (1) according to claim 4 or 5, **characterized by** the fact that said rotation and translation means (22) comprise at least an actuator (23) operatively associated with said stop element (20).

7. Spindle (1) according to claim 6, **characterized by** the fact that said rotation and translation means (22) comprise at least a thrust element (24) operatively associated with said actuator (23) and able to engage on said stop element (20).

8. Spindle (1) according to claim 7, **characterized by** the fact that said thrust element (24) is movable by the action of said actuator (23) between a first position and a second position along a direction substantially transversal with respect to the displacement direction of said movable element (8) and by the fact that said thrust element (24) has at least an inclined surface (25) that, during the translation between said first and second positions, is able to engage on at least a portion of said stop element (20), to rotate said stop element (20) from said sliding position to said stopping position.

9. Spindle (1) according to claim 8, **characterized by** the fact that said thrust element (24) is movable by the action of said actuator (23) between said second position and a third position along a direction substantially transversal to the displacement direction of said movable element (8) and by the fact that during the translation between said second and said third position said inclined surface (25) is able to engage on at least a portion of said stop element (20) to move said stop element (20) from said stopping position to said pulling position.

10. Spindle (1) according to one or more of claims 6 to 8, **characterized by** the fact that between said stop element (20) and said thrust element (24) is placed at least a sliding roller (43) able to facilitate the rotation and translation of said stop element (20).

## Patentansprüche

1. Spindel (1) für Ausrüstungsmaschinen für Werkstätten, insbesondere für Reifenwechselmaschinen oder dergleichen, umfassend eine Stützkonstruktion (2), die mindestens ein Auflageelement (3) für eine Felge (C) eines Reifens (D) für Fahrzeuge besitzt, Rotationsmittel (6) des Auflageelements (3) entlang mindestens einer Rotationsachse (B) und Feststellmittel (7) der Felge (C) auf dem Auflageelement (3), wobei die Feststellmittel (7) umfassen:
- mindestens ein Bewegungselement (8), das mindestens einen äußeren Teil (9) aufweist, das in Bezug auf das Auflageelement (3) herausragt und das einführbar ist in eine Durchgangsbohrung an der Felge (C),
- mindestens ein Rückhalteelement (10) der Felge (C) verbunden mit dem äußeren Teil (9),
- mindestens ein Stopelement (20) des Bewegungselements (8), das mindestens eine Durchgangsbohrung (21) aufweist, in die mindestens ein verlängertes Teilstück (12) des Bewegungselements (8) eingeführt ist, das Stopelement (20) zwischen einer Gleitposition, indem die Durchgangsbohrung (21) mit Spiel an das verlängerte Teilstück (12) gekoppelt ist, und einer Stopposition, indem die Durchgangsbohrung (21) im Wesentlichen gegenüber dem verlängerten Teilstück (12) geneigt ist und die Wände der Durchgangsbohrung (21) an dem verlängerten Teilstück (12) anliegen, rotierbar ist, und
- Betriebsmittel (22) des Stopelements (20) zwischen der Gleitposition und der Stopposition;
**dadurch gekennzeichnet, dass**:
- das verlängerte Teilstück (12) mindestens eine Verzahnung (40) umfasst, die eine Vielzahl von Einhausungsausnehmungen (41) aufweist; und
- die Wände der Durchgangsbohrung (21) mindestens ein Positionierungselement (42) umfassen, das an die Einhausungsausnehmungen (41) in vorbestimmten Positionen des Bewegungselements (8) koppelbar ist.

2. Spindel (1) nach Anspruch 1, **dadurch gekennzeichnet, dass** das Positionierungselement (42) die Art von Rolle ist, die auf dem Stopelement (20) in einer um eine Achse im Wesentlichen transversal zur Richtung des verlängerten Teilstücks (12) drehbaren Weise befestigt ist.

3. Spindel (1) nach Anspruch 1 oder 2, **dadurch gekennzeichnet, dass** zwischen dem Stopelement (20) und dem verlängerten Teilstück (12) eine rollende Rolle (46) angeordnet ist, die auf dem Stopelement (20) an den Wänden der Durchgangsbohrung (21) und in einer drehbaren Weise um eine Achse im Wesentlichen transversal zur Richtung des verlängerten Teilstücks (12) befestigt ist, um in Kontakt mit der Seite des verlängerten Teilstücks (12) gegenüber der Verzahnung (40) zu rollen.

4. Spindel (1) nach einem oder mehreren der vorhergehenden Ansprüche, **dadurch gekennzeichnet, dass** die Betriebsmittel (22) Rotations- und Translationsmittel (22) des Stopelements (20) umfassen, die in der Lage sind, das Stopelement (20) von der Gleitposition zu der Stopposition zu rotieren, um das Stopelement (20) auf dem Bewegungselement (8) zu blockieren, und die in der Lage sind, das Stopelement (20) von der Stopposition in eine Ziehposition zu übertragen, um das Bewegungselement (8) zu ziehen.

5. Spindel (1) nach Anspruch 4, **dadurch gekennzeichnet, dass**:
- das Bewegungselement (8) in einer freigegebenen Konfiguration in einer angehobenen Position ist, wobei das Rückhalteelement (10) im Wesentlichen von dem Auflageelement (3) wegbewegt wird, und das Stopelement (20) in der Gleitposition ist;
- das Bewegungselement (8) in einer Zwischenkonfiguration in einer abgesenkten Position ist, wobei das Rückhalteelement (10) nahe an das Auflageelement (3) bewegt wird und in der Lage ist, in Kontakt mit der Felge (C) angeordnet zu werden, und das Stopelement (20) in der Stopposition ist;
- das Bewegungselement (8) in einer blockierenden Konfiguration, in einer blockierenden Position ist, wobei das Rückhalteelement (10) an der Felge (C) anliegt, um die Felge (C) auf dem Auflageelement zu blockieren, und das Stopelement (20) in der Ziehposition ist.

6. Spindel (1) nach Anspruch 4 oder 5, **dadurch gekennzeichnet, dass** die Rotations- und Translationsmittel (22) mindestens einen Antrieb (23) umfassen, der mit dem Stopelement (20) wirkverbunden ist.

7. Spindel (1) nach Anspruch 6, **dadurch gekennzeichnet, dass** die Rotations- und Translationsmittel (22) mindestens ein Stoßelement (24) umfassen, das mit dem Antrieb (23) wirkverbunden ist und in der Lage ist, an dem Stopelement (20) anzuliegen.

8. Spindel (1) nach Anspruch 7, **dadurch gekennzeichnet, dass** das Stoßelement (24) durch die Bewegung des Antriebs (23) zwischen einer ersten Position und einer zweiten Position entlang einer Richtung im Wesentlichen transversal bezüglich der Verschiebungsrichtung des Bewegungselements (8) beweglich ist und dass das Stoßelement (24) mindestens eine geneigte Fläche (25) aufweist, die während der Translation zwischen der ersten und zweiten Position in der Lage ist, an mindestens einem Teil des Stopelements (20) anzuliegen, um das Stopelement (20) von der Gleitposition in die Stopposition zu rotieren.

9. Spindel (1) nach Anspruch 8, **dadurch gekennzeichnet, dass** das Stoßelement (24) durch die Bewegung des Antriebs (23) zwischen der zweiten Position und einer dritten Position entlang einer im Wesentlichen gegenüber der Verschieberichtung transversalen Richtung des Bewegungselements (8) beweglich ist und dass während der Translation zwischen der zweiten und der dritten Position die geneigte Fläche (25) in der Lage ist, mindestens an einem Teil des Stopelements (20) anzuliegen, um das Stopelement (20) von der Stopposition in die Ziehposition zu bewegen.

10. Spindel (1) nach einem oder mehreren der Ansprüche 6 bis 8, **dadurch gekennzeichnet, dass** zwischen dem Stopelement (20) und dem Stoßelement (24) mindestens eine Gleitrolle angeordnet ist, die in der Lage ist, die Rotation und Translation des Stopelements (20) zu erleichtern.

## Revendications

1. Broche (1) pour machines d'équipement de garage, en particulier pour machines de changement de pneumatiques ou machines similaires, comprenant une structure de support (2) possédant au moins un élément de repos (3) pour une jante (C) de roue (D) de véhicule, des moyens de rotation (6) dudit élément de repos (3) autour d'au moins un axe de rotation (B) et des moyens de verrouillage (7) de ladite jante (C) sur ledit moyen de repos (3), lesdits moyens de verrouillage (7) comprenant :
- au moins un élément mobile (8) possédant au moins une extrémité (9) faisant saillie par rapport audit élément de repos (3) et pouvant être insérée dans un trou débouchant sur ladite jante (C),
- au moins un élément de retenue (10) de ladite jante (C) associé à ladite extrémité (9),
- au moins un élément de butée (20) dudit élément mobile (8) comportant au moins un trou débouchant (21) dans lequel est insérée au moins une section allongée (12) dudit élément mobile (8), ledit élément de butée (20) pouvant être en rotation entre une position de coulissement, dans laquelle ledit trou débouchant (21) est couplé à ladite section allongée (12) avec jeu, et une position d'arrêt, dans laquelle ledit trou débouchant (21) est sensiblement incliné par rapport à ladite section allongée (12) et les parois dudit trou débouchant (21) sont engagées sur ladite section allongée (12), et
- des moyens de fonctionnement (22) dudit élément de butée (20) entre ladite position de coulissement et ladite position d'arrêt ;
**caractérisée en ce que** :
- ladite section allongée (12) comprend au moins une dentelure (40) possédant plusieurs concavités de logement (41) ; et
- lesdites parois du trou débouchant (21) comprennent au moins un élément de positionnement (42) pouvant être couplé auxdites concavités de logement (41) dans des positions prédéfinies dudit élément mobile (8).

2. Broche (1) selon la revendication 1, **caractérisée en ce que** ledit élément de positionnement (42) est un type de rouleau monté sur ledit élément de butée (20) tournant autour d'un axe sensiblement transversal à la direction de ladite section allongée (12).

3. Broche (1) selon la revendication 1 ou 2, **caractérisée en ce qu'**entre ledit élément de butée (20) et ladite section allongée (12) se trouve un rouleau roulant (46) monté sur ledit élément de butée (20) au niveau des parois dudit trou débouchant (21) et tournant autour d'un axe sensiblement transversal à la direction de ladite section allongée (12) pour rouler en contact avec le côté de ladite section allongée (12) opposé à ladite dentelure (40).

4. Broche (1) selon une ou plusieurs des revendications précédentes, **caractérisée en ce que** lesdits moyens de fonctionnement (22) comprennent des moyens de rotation et de translation (22) dudit élément de butée (20) pouvant mettre en rotation ledit élément de butée (20) à partir d'une position de coulissement vers la position d'arrêt pour verrouiller ledit élément de butée (20) sur ledit élément mobile (8) et pouvant translater ledit élément de butée (20) à partir de ladite position d'arrêt vers une position de traction pour faire glisser ledit élément mobile (8).

5. Broche (1) selon la revendication 4, **caractérisée en ce que** :
- dans une configuration de relâchement, ledit élément mobile (8) est en position élevée, ledit élément de retenue (10) est sensiblement éloigné dudit élément de repos (8) et ledit élément de butée (20) est dans ladite position de coulissement ;
- dans une configuration intermédiaire, ledit élément mobile (8) est en position abaissée, ledit élément de retenue (10) est rapproché par rapport audit élément de repos (3) et peut être installé en contact avec ladite jante (C) et ledit élément de butée (20) est dans ladite position d'arrêt ;
- dans une configuration de verrouillage, ledit élément mobile (8) est en position de verrouillage, ledit élément de retenue (10) est engagé sur ladite jante (C) pour verrouiller ladite jante (C) sur ledit élément de repos (3) et ledit élément de butée (20) est dans ladite position de traction.

6. Broche (1) selon la revendication 4 ou 5, **caractérisée en ce que** lesdits moyens de rotation et de translation (22) comprennent au moins un actionneur (23) associé de façon fonctionnelle audit élément de butée (20).

7. Broche (1) selon la revendication 6, **caractérisée en ce que** lesdits moyens de rotation et de translation (22) comprennent au moins un élément de poussée (24) associé de façon fonctionnelle audit actionneur (23) et pouvant être engagé sur ledit élément de butée (20).

8. Broche (1) selon la revendication 7, **caractérisée en ce que** ledit élément de poussée (24) est mobile par l'action dudit actionneur (23) entre une première position et une deuxième position le long d'une direction sensiblement transversale par rapport à la direction de déplacement dudit élément mobile (8) et **en ce que** ledit élément de poussée (24) possède au moins une surface inclinée (25) pouvant, lors de la translation entre la première et la deuxième position, être engagé sur au moins une partie dudit élément de butée (20), pour mettre en rotation ledit élément de butée (20) de ladite position de coulissement à ladite position d'arrêt.

9. Broche (1) selon la revendication 8, **caractérisée en ce que** ledit élément de butée (24) est mobile par l'action dudit actionneur (23) entre ladite deuxième position et une troisième position le long d'une direction sensiblement transversale à la direction de déplacement dudit élément mobile (8) et **en ce que**, pendant la translation entre ladite deuxième et ladite troisième position, ladite surface inclinée (25) peut être engagée sur au moins une partie dudit élément de butée (20) pour déplacer ledit élément de butée (20) de ladite position d'arrêt à ladite position de traction.

10. Broche (1) selon l'une ou plusieurs des revendications 6 à 8, **caractérisée en ce qu'**entre ledit élément de butée (20) et ledit élément de poussée (24) se trouve au moins un rouleau coulissant (43) pouvant faciliter la rotation et la translation dudit élément de butée (20).
